# FASCICULE DE BREVET EUROPEEN

(11) **EP 3 655 285 B1**
(45) Date de publication et mention de la délivrance du brevet: **16.03.2022**
(21) Numéro de dépôt: 18749029.7
(22) Date de dépôt: 03.07.2018
(51) Int. Cl.: B60N 2/12, B60N 2/30

(54) **SIEGE DE VEHICULE ESCAMOTABLE**
EINZIEHBARER FAHRZEUGSITZ
RETRACTABLE VEHICLE SEAT

(30) Priorité: 17.07.2017 FR 1756767
(43) Date de publication de la demande: 27.05.2020
(73) Titulaire: Renault s.a.s, 92100 Boulogne Billancourt (FR)
(72) Inventeur: HEWAK, Gregor, 95490 Vaureal (FR); BEZEAULT, Loic, 78150 Le Chesnay (FR); QUIINTIN, Thomas, 92410 Ville D'avray (FR)
(74) Mandataire: Renault Group
(86) Numéro de dépôt international: PCT/FR2018/051653
(87) Numéro de publication internationale: WO 2019/016443

(56) Documents cités:
- DE-A1-102014 213 860
- FR-A1- 2 898 554
- FR-A1- 2 917 679

## Description

L'invention se rapporte à un siège de véhicule escamotable.

Certains types de véhicule, et notamment de véhicule automobile, sont dotés d'une deuxième, voire d'une troisième rangée de sièges. Or, il est souvent compliqué d'accéder dans de bonnes conditions à cette deuxième ou cette troisième rangée de sièges depuis l'extérieur du véhicule, car le siège placé juste derrière la porte restreint souvent le passage d'accès à cette rangée, obligeant une personne désireuse d'accéder à cette rangée, à se livrer à des contorsions malaisées et compliquées. L'accession à cette deuxième ou à cette troisième rangée s'effectue souvent par le biais d'un déplacement et/ou escamotage judicieux du siège se trouvant immédiatement derrière la porte, afin d'agrandir les dimensions du passage permettant d'atteindre la rangée de sièges en question.

De tels sièges escamotables sont connus de l'état de la technique. Par exemple, la demande FR2929179 décrit un siège, pouvant être escamoté au moyen d'un mécanisme complexe, impliquant plusieurs bielles. Outre la complexité du mécanisme mis en œuvre, ledit mécanisme présente l'inconvénient de surélever de façon importante le siège dans le véhicule et de ne pas le positionner suffisamment à l'avant, pour dégager dans des conditions optimisées, l'accès à la rangée de sièges.

FR2917679 concerne aussi un siège escamotable.

Un siège selon l'invention est apte à être déplacé vers l'avant du véhicule, afin d'agrandir le passage d'accès à la rangée de sièges située derrière ledit siège, tout en s'affranchissant des inconvénients relevés dans l'état de la technique.

Les notions « avant », « arrière », « transversal » et longitudinal » pour définir le siège doivent être interprétées par rapport à un véhicule dans lequel serait monté ledit siège. Ainsi, par exemple, lorsque le siège bascule vers l'avant, il bascule vers l'avant du véhicule en supposant qu'il soit placé normalement dans ledit véhicule.

L'invention a pour objet un siège de véhicule comprenant deux rails support, un dossier et une assise, ledit dossier étant monté pivotant sur l'assise autour d'un axe de liaison.

La principale caractéristique technique d'un siège selon l'invention est qu'il est monté pivotant sur les rails au moyen d'un mécanisme comprenant deux bielles arrière, deux bielles avant et deux bielles de liaison, de sorte que,
- Chaque bielle arrière relie de façon articulée un premier axe d'un rail à un deuxième axe du dossier,
- Chaque bielle avant relie de façon articulée un troisième axe de l'assise à un quatrième axe situé à une extrémité avant de la bielle de liaison,
- Chaque bielle de liaison relie de façon articulée un cinquième axe de la bielle arrière au quatrième axe de la bielle avant,
- Chaque bielle de liaison possède une fente dans laquelle passe un sixième axe d'un rail situé devant le premier axe.

La spécificité d'un tel siège est qu'il peut être déplacé vers l'avant avec un mécanisme analogue à celui d'un pantographe, permettant ainsi de compacter le mécanisme contribuant au déplacement du siège. Grâce à une cinématique aussi rigoureuse que précise octroyé par ce mécanisme de « pantographe », le siège se soulève de façon modérée dans le véhicule, lorsqu'il est déplacé vers l'avant, et peut venir occuper une position très avancée dans ledit véhicule, afin de dégager un maximum de place à l'arrière de celui-ci, pour accéder à la rangée de sièges placée derrière ledit siège selon une direction transversale du véhicule. Les bielles sont préférentiellement des pièces allongées présentant chacune un axe longitudinal. Avantageusement, les bielles sont métalliques. Grâce à la fente, chaque bielle de liaison est susceptible de combiner un mouvement de rotation et de de coulissement. Préférentiellement tous les axes intervenant dans un système de siège selon l'invention sont fixes vis-à-vis de la pièce dans laquelle ils sont montés.

Avantageusement, tous les axes de rotation impliqués au niveau du mécanisme ainsi que l'axe de liaison entre l'assise et le dossier sont tous parallèles. Si le siège était placé dans un véhicule, tous les axes seraient alors parallèles à un axe transversal dudit véhicule.

De façon préférentielle, le dossier comprend un panneau supérieur prolongé par deux flasques parallèles faisant un coude et fixés à l'assise, l'axe de liaison passant par une extrémité de chaque flasque et par une zone centrale de l'assise. Les flasques constituent ainsi des pièces de liaison entre le panneau supérieur et l'assise, et possèdent chacun un segment s'étendant parallèlement au panneau supérieur et un segment s'étendant sensiblement le long de l'assise lorsque le siège est dans une position fonctionnelle. Quelle que soit la position du siège, c'est-à-dire fonctionnelle ou escamotée, cette configuration de positionnement des axes est toujours vérifiée.

Préférentiellement, le deuxième axe du dossier traverse les flasques en étant situé derrière l'axe de liaison.

De façon avantageuse, le premier axe passe par une extrémité de la bielle arrière et le deuxième axe passe par une autre extrémité de ladite bielle arrière.

Avantageusement, la longueur des bielles arrière est inférieure ou égale à une demi-longueur d'assise. Puisque le siège va notamment pivoter autour des bielles arrière, la faible longueur desdites bielles arrière va limiter l'amplitude de surélévation du siège.

De façon préférentielle, le troisième axe traverse une extrémité avant de l'assise.

Préférentiellement, le troisième axe passe par une extrémité de la bielle avant et le quatrième axe passe par une autre extrémité de ladite bielle avant.

De façon avantageuse, le cinquième axe passe par une zone centrale de la première bielle située entre le premier et le deuxième axe.

L'invention a pour autre objet un procédé de déplacement vers l'avant d'un siège selon l'invention pour dégager un espace derrière ledit siège.

La principale caractéristique d'un procédé selon l'invention est qu'il comprend les étapes suivantes,
- Une de poussée vers l'avant du siège,
- Une étape de déplacement du siège simultanément vers l'avant et vers le haut par un pivotement de la bielle arrière autour du premier axe, entrainant un soulèvement de la partie arrière de la bielle de liaison grâce à un coulissement de la fente autour du sixième axe,
- Une étape de pivotement de l'assise se traduisant par un abaissement d'une zone avant de l'assise et par une surélévation d'une zone arrière de ladite assise, grâce notamment à un pivotement vers l'avant et vers le bas de la bielle avant autour du quatrième axe provoqué par le pivotement de la bielle arrière via la bielle de liaison,
- Une étape de poursuite du pivotement du siège jusqu'à ce que la bielle arrière dépasse une direction verticale, le quatrième axe reliant la bielle avant et la bielle de liaison se retrouvant sous le niveau d'un rail, durant cette étape le siège poursuivant sa course vers l'avant et se rabaissant légèrement pour atteindre une position finale escamotée.

Il s'agit des principales étapes d'un procédé de déplacement d'un siège selon l'invention, expliquant les deux composantes de déplacement du siège, à savoir une première composante vers le haut et vers l'avant, et une deuxième composante vers le bas et vers l'avant, grâce à la mise en œuvre des différentes bielles apparaissant dans ce mécanisme de type pantographe. Grâce à un tel procédé, le siège se surélève faiblement dans le véhicule, et est repoussée très en avant afin de dégager le maximum de place derrière lui.

On donne ci-après, une description détaillée d'un mode de réalisation préféré d'un système de siège selon l'invention, en se référant aux figures suivantes :
- La figure 1 est une vue en coupe simplifiée d'un véhicule comprenant un siège selon l'invention,
- La figure 2 est une vue en perspective d'un siège selon l'invention,
- Les figures 3A, 3B et 3C sont trois vues en coupe d'un siège selon l'invention, respectivement dans une position fonctionnelle, dans une position intermédiaire de déplacement et dans une position finale escamotée.

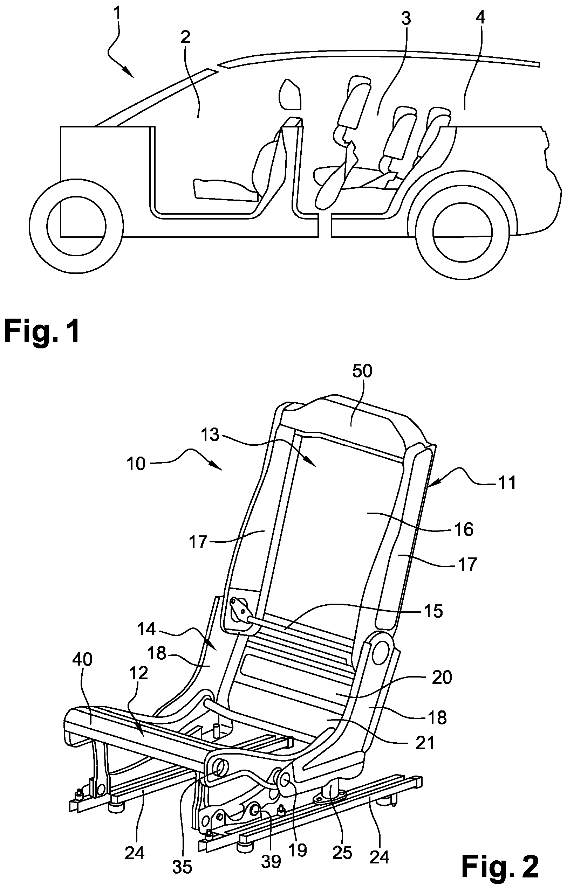

En se référant à la figure 1, certains véhicules 1 comprennent une rangée avant 2 de sièges, généralement constituée par un siège passager et un siège conducteur, et une deuxième rangée arrière 3 de sièges pouvant par exemple comprendre trois sièges, placés côte à côte. Il n'est pas exclu que le véhicule puisse comprendre une troisième rangée arrière 4 de sièges, placée derrière ladite deuxième rangée. Or, il arrive souvent que l'accès à la deuxième rangée 2 soit rendue difficile depuis l'extérieur du véhicule, car le passage permettant de l'atteindre est restreint, obligeant une personne à se contorsionner et/ou à adopter une posture contraignante pour pouvoir s'asseoir sur un siège de cette rangée 3.

Afin d'élargir le passage d'accès à la deuxième rangée, le siège se trouvant juste derrière la porte et que l'on trouve donc en premier en ouvrant ladite porte, est monté dans le véhicule, de sorte qu'il puisse être avancé depuis sa position fonctionnelle, pour dégager le passage d'accès à la deuxième rangée arrière 3.

Un siège selon l'invention est ainsi conçu pour pouvoir être avancé dans des conditions optimisées, afin d'élargir le passage situé derrière lui et permettant d'accéder à la deuxième rangée arrière 3 de sièges. De cette manière, un siège selon l'invention peut avantageusement être implanté dans un véhicule pour jouer le rôle du siège escamotable ci-avant mentionné.

Afin de bien comprendre l'invention, il sera supposé que le siège selon l'invention peut passer d'une position fonctionnelle à une position avancée escamotée avancée.

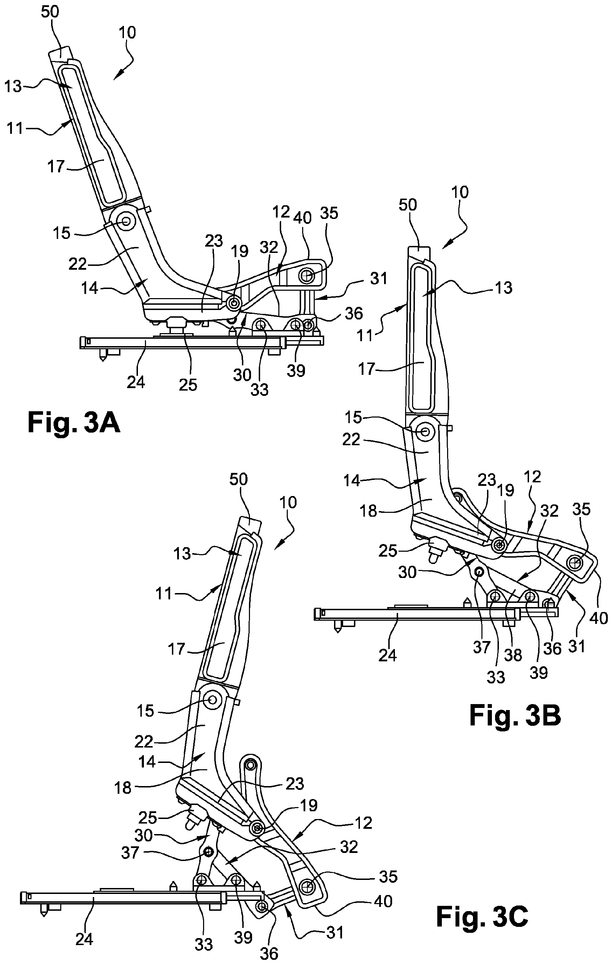

En se référant aux figures 2, 3A, 3B et 3C, un siège 10 selon l'invention comprend un dossier 11 et une assise 12, ledit dossier 11 comportant une partie supérieure 13 et une partie inférieure 14, ladite partie supérieure 13 étant montée pivotante sur ladite partie inférieure 14 au moyen d'un axe de rotation 15 sensiblement horizontal et s'étendant selon un axe transversal du véhicule 1. La partie supérieure 13 possède un panneau supérieur 16 surmonté d'une traverse 50 d'appui-tête, et bordé latéralement par deux bords perpendiculaires 17, saillant vers l'avant dudit panneau 16. La partie inférieure 14 comprend deux flasques 18 latéraux prolongeant les deux bords 17 de la partie supérieure 13 du dossier 11. Les deux flasques 18 font un coude en étant sensiblement en forme de L, et sont reliés l'un à l'autre au moyen d'un panneau inférieur comprenant deux pans 20, 21. L'assise 12 est une pièce de faible épaisseur et légèrement incurvée, dont le profil est adapté à une personne en position assise.

En se référant aux figures 2 et 3A, lorsque le siège 10 est dans une position fonctionnelle, chaque flasque 18 possède un segment supérieur 22 qui s'étend parallèlement au panneau supérieur 16 et un segment inférieur 23 qui s'étend parallèlement à l'assise 12. Le dossier 11 est monté pivotant sur l'assise 12, au moyen d'un axe de liaison 19 passant par une extrémité des segments inférieurs 23 des deux flasques 18, et traversant ladite assise 12. Cet axe de liaison 19 est horizontal et s'étend selon un axe transversal du véhicule.

Le siège 10 possède deux rails inférieurs 24 sensiblement horizontaux et s'étendant selon un axe longitudinal du véhicule. Chaque flasque 18 possède un plot 25 inférieur profilé s'étendant vers le bas, et destiné à venir s'enfoncer dans un évidement du rail 24 placé au droit dudit flasque 18.

En se référant aux figures 3A, 3B et 3C, le siège est doté d'un mécanisme lui permettant de passer d'une position fonctionnelle, telle que par exemple celle illustrée aux figures 2 et 3A, à une position escamotée comme celle par exemple illustrée à la figure 3C.

Ce mécanisme comprend ainsi, deux bielles arrière 30, deux bielles avant 31 et deux bielles de liaison 32. Ce mécanisme comporte deux composantes identiques placées latéralement au niveau du siège 10, et incluant chacune une bielle arrière 30, une bielle avant 31 et une bielle de liaison 32. Pour simplifier la compréhension de l'invention, la description détaillée ne va se focaliser que sur une seule des deux composantes.

Les différentes bielles sont arrangées ensemble se sorte que :
- La bielle arrière 30 relie de façon articulée un premier axe 33 solidaire d'un rail 24 à un deuxième axe (non visible sur les figures) solidaire du dossier 11,
- La bielle avant 31 relie de façon articulée un troisième axe 35 solidaire de l'assise 12 à un quatrième axe 36 situé à une extrémité avant de la bielle de liaison 32,
- La bielle de liaison 32 relie de façon articulée un cinquième axe 37 solidaire de la bielle arrière 30 au quatrième axe 36 de la bielle avant 31,
- La bielle de liaison 32 possède une fente 38 dans laquelle passe un sixième axe 39 solidaire d'un rail 24 et placé devant le premier axe 33 solidaire dudit rail 24.

Le premier axe 33 et le sixième axe 39 sont parallèles et s'étendent selon une direction transversale du véhicule. Ces deux axes 33, 39 sont horizontaux et sont situés dans une zone avant du rail 24, le sixième axe 39 étant placé devant le premier axe 33.

Le deuxième axe est horizontal et s'étend selon un axe transversal du véhicule. Ce deuxième axe est solidaire du segment inférieur 23 d'un flasque 18 du dossier 11 et est placé derrière l'axe de liaison 22 reliant de façon articulée le dossier 11 et l'assise 12.

Le troisième axe 35 est horizontal et s'étend selon une direction transversale du véhicule. Il est solidaire d'une extrémité avant 40 de l'assise 12.

Le quatrième axe 36 est horizontal et s'étend selon une direction transversale du véhicule. Il est solidaire, soit de la bielle avant 31 soit de la bielle de liaison 32. Cette axe 36 permet de réaliser une liaison articulée entre la bielle avant 31 et la bielle de liaison 32, au niveau d'une extrémité basse de ladite bielle avant 31 et d'une extrémité avant de ladite bielle de liaison 32.

Le cinquième axe 37 est horizontal et s'étend selon une direction transversale du véhicule. Il est solidaire de la bielle arrière 30 au niveau d'une zone centrale située entre le premier axe 33 et le deuxième axe.

Toutes les bielles 30, 31, 32 ci-avant mentionnées sont des pièces allongées, préférentiellement réalisées en métal.

La bielle de liaison 32 présente une fente 38 longitudinale alignée sur un axe longitudinal et central de ladite bielle de liaison 32. Cette bielle de liaison 32 relie la bielle arrière 30 à la bielle avant 31, de sorte que le sixième axe 39 soit inséré dans la fente 38. Ledit sixième axe 39 s'étend perpendiculairement à un axe longitudinal de la fente 38.

En se référant à la figure 3A, lorsque le siège 10 est dans une position fonctionnelle, la bielle arrière 30 et la bielle de liaison 32 sont sensiblement horizontales et sont disposées juste au-dessus d'un rail 24 du siège 10, la bielle avant 31 s'étendant selon une direction sensiblement verticale. Dans cette position fonctionnelle, le plot 25 saillant sous le flasque 18 est inséré dans l'évidement du rail 24 prévu à cet effet.

Un procédé de déplacement vers l'avant d'un siège 10 selon l'invention depuis sa position fonctionnelle, pour notamment agrandir le passage d'accès à la deuxième rangée arrière 3 de sièges, comprend les étapes suivantes :
- Une étape de poussée vers l'avant du siège 10 au niveau de son dossier 11 entrainant un pivotement vers l'avant et vers le haut de la bielle arrière 30 autour du premier axe 33 comme l'illustre la figure 3B. Ce pivotement entraine un mouvement combiné de translation et de rotation de la bielle de liaison 32, grâce notamment au coulissement de la fente 38 le long du sixième axe 39. Durant cette phase de pivotement, l'extrémité avant de la bielle de liaison 32 demeure sensiblement à la même altitude. Le pivotement vers le haut de la bielle arrière 31 engendre également une légère surélévation vers l'avant du dossier 11 du siège 10, entrainant un basculement vers l'avant et vers le bas de l'assise 12 dudit siège 10, ainsi qu'un pivotement vers l'avant de la bielle avant 31 accrochée au troisième axe 35 solidaire d'une extrémité avant 40 de l'assise 12.
- Une étape de poursuite de la poussée du siège 10, jusqu'à atteindre la position escamotée illustrée à la figure 3C, qui est la position la plus avancée du siège 10 pour agrandir au maximum le passage d'accès à la deuxième rangée 3 de sièges. Pour atteindre cette position, la bielle arrière 30 a poursuivi son pivotement vers l'avant jusqu'à dépasser légèrement une direction verticale. La bielle de liaison 32 a poursuivi son mouvement combiné de translation, grâce au coulissement de la fente 38 le long du sixième axe 39, et de rotation se traduisant par une élévation de son extrémité arrière et un abaissement de son extrémité avant. La poursuite du pivotement vers le haut de la bielle arrière 31 a également engendré un léger abaissement vers l'avant du dossier 11 du siège 10, entrainant la poursuite du basculement vers l'avant et vers le bas de l'assise 12 dudit siège 10, ainsi qu'une poursuite du pivotement vers l'avant de la bielle avant 31 accrochée au troisième axe 35 solidaire d'une extrémité avant 40 de l'assise 12. Pour cette position escamotée, le quatrième axe 36 a basculé sous le niveau du rail 24.

En se référant à la figure 3C, dans sa position escamotée, le siège 10 s'est peu élevé dans le véhicule, par rapport à sa position fonctionnelle illustrée à la figure 3A et se retrouve dans une position très avancée dans ledit véhicule, permettant de libérer derrière lui un espace libre conséquent, pour permettre d'accéder aisément à la deuxième rangée arrière 3 de siège. Cette libération d'espace est surtout effective en zone basse pour le passage des pieds, car les bielles sont toutes avancées.

## Revendications

1. Siège (10) de véhicule comprenant deux rails support (24), un dossier (11) et une assise (12), ledit dossier (11) étant monté pivotant sur l'assise (12) autour d'un axe de liaison (19), **caractérisé en ce que** le siège (10) est monté pivotant sur les rails (24) au moyen d'un mécanisme comprenant deux bielles arrière (30), deux bielles avant (31) et deux bielles de liaison (32), de sorte que,
- Chaque bielle arrière (30) relie de façon articulée un premier axe (33) d'un rail (24) à un deuxième axe du dossier (11),
- Chaque bielle avant (31) relie de façon articulée un troisième axe (35) de l'assise (12) à un quatrième axe (36) situé à une extrémité avant de la bielle de liaison (32),
- Chaque bielle de liaison (32) relie de façon articulée un cinquième axe (37) de la bielle arrière (30) au quatrième axe (36) de la bielle avant (31),
- Chaque bielle de liaison (32) possède une fente (38) dans laquelle passe un sixième axe (39) d'un rail (24) situé devant le premier axe (33).

2. Siège de véhicule selon la revendication 1, **caractérisé en ce que** tous les axes de rotation (33, 35, 36, 37, 39) impliqués au niveau du mécanisme ainsi que l'axe de liaison (19) entre l'assise (12) et le dossier (11) sont tous parallèles.

3. Siège de véhicule selon l'une quelconque des revendications 1 ou 2, **caractérisé en ce que** le dossier (11) comprend un panneau supérieur (16) prolongé par deux flasques (18) parallèles faisant un coude et fixés à l'assise (12), et **en ce que** l'axe de liaison (19) passe par une extrémité de chaque flasque (18) et par une zone centrale de l'assise (12).

4. Siège de véhicule selon la revendication 3, **caractérisé en ce que** le deuxième axe du dossier (11) traverse les flasques (18) en étant situé derrière l'axe de liaison (19).

5. Siège de véhicule selon l'une quelconque des revendications 1 à 4, **caractérisé en ce que** le premier axe (33) passe par une extrémité de la bielle arrière (30) et **en ce que** le deuxième axe passe par une autre extrémité de ladite bielle arrière (30).

6. Siège de véhicule selon l'une quelconque des revendications 1 à 5, **caractérisé en ce que** la longueur des bielles arrière (30) est inférieure ou égale à une demi-longueur d'assise (12).

7. Siège de véhicule selon l'une quelconque des revendications 1 à 6, **caractérisé en ce que** le troisième axe (35) traverse une extrémité avant (40) de l'assise (12).

8. Siège de véhicule selon l'une quelconque des revendications 1 à 7, **caractérisé en ce que** le troisième axe (35) passe par une extrémité de la bielle avant (31) et **en ce que** le quatrième axe (36) passe par une autre extrémité de ladite bielle avant (31).

9. Siège de véhicule selon l'une quelconque des revendications 1 à 8, **caractérisé en ce que** le cinquième axe (37) passe par une zone centrale de la première bielle (30) située entre le premier (33) et le deuxième axe.

10. Procédé de déplacement vers l'avant d'un siège (10) selon l'une quelconque des revendications 1 à 9, pour dégager un espace derrière ledit siège (10) **caractérisé en ce qu'**il comprend les étapes suivantes,
- Une étape de poussée vers l'avant du siège (10),
- Une étape de déplacement du siège (10) simultanément vers l'avant et vers le haut par un pivotement de la bielle arrière (30) autour du premier axe (33), entrainant un soulèvement de la partie arrière de la bielle de liaison (32) grâce à un coulissement de la fente (38) le long du sixième axe (39),
- Une étape de pivotement de l'assise (12) se traduisant par un abaissement d'une zone avant de l'assise (12) et par une surélévation d'une zone arrière de ladite assise (12) grâce notamment à un pivotement vers l'avant et vers le bas de la bielle avant (31) autour du quatrième axe (36), provoqué par le pivotement de la bielle arrière (30) via la bielle de liaison (32),
- Une étape de poursuite du pivotement du siège (10) jusqu'à ce que la bielle arrière (30) dépasse une direction verticale, le quatrième axe (36) reliant la bielle avant (31) et la bielle de liaison (32) se retrouvant sous le niveau d'un rail (24), durant cette étape le siège (10) poursuivant sa course vers l'avant et se rabaissant légèrement pour atteindre une position finale escamotée.

## Patentansprüche

1. Fahrzeugsitz (10), umfassend zwei Tragschienen (24), eine Rückenlehne (11) und eine Sitzfläche (12), wobei die Rückenlehne (11) um eine Verbindungsachse (19) schwenkbar an der Sitzfläche (12) montiert ist, **dadurch gekennzeichnet, dass** der Sitz (10) mit Hilfe eines Mechanismus, der zwei hintere Stangen (30), zwei vordere Stangen (31) und zwei Verbindungsstangen (32) umfasst, schwenkbar auf den Schienen (24) montiert ist, so dass
- jede hintere Stange (30) eine erste Achse (33) einer Schiene (24) gelenkig mit einer zweiten Achse der Rückenlehne (11) verbindet,
- jede vordere Stange (31) eine dritte Achse (35) der Sitzfläche (12) gelenkig mit einer vierten, an einem vorderen Ende der Verbindungsstange (32) befindlichen Achse (36) verbindet,
- jede Verbindungsstange (32) eine fünfte Achse (37) der hinteren Stange (30) gelenkig mit der vierten Achse (36) der vorderen Stange (31) verbindet,
- jede Verbindungsstange (32) einen Schlitz (38) besitzt, durch den eine sechste Achse (39) einer Schiene (24), die sich vor der ersten Achse (33) befindet, verläuft.

2. Fahrzeugsitz nach Anspruch 1, **dadurch gekennzeichnet, dass** alle am Mechanismus beteiligten Drehachsen (33, 35, 36, 37, 39) sowie die Verbindungsachse (19) zwischen der Sitzfläche (12) und der Rückenlehne (11) alle parallel sind.

3. Fahrzeugsitz nach einem der Ansprüche 1 oder 2, **dadurch gekennzeichnet, dass** die Rückenlehne (11) eine obere Platte (16) umfasst, die durch zwei parallele Flansche (18) verlängert wird, die einen Bogen bilden und an der Sitzfläche (12) befestigt sind, und dass die Verbindungsachse (19) durch ein Ende jedes Flanschs (18) und durch einen mittleren Bereich der Sitzfläche (12) verläuft.

4. Fahrzeugsitz nach Anspruch 3, **dadurch gekennzeichnet, dass** die zweite Achse der Rückenlehne (11) durch die Flansche (18) verläuft und dabei hinter der Verbindungsachse (19) angeordnet ist.

5. Fahrzeugsitz nach einem der Ansprüche 1 bis 4, **dadurch gekennzeichnet, dass** die erste Achse (33) durch ein Ende der hinteren Stange (30) verläuft und dass die zweite Achse durch ein anderes Ende der hinteren Stange (30) verläuft.

6. Fahrzeugsitz nach einem der Ansprüche 1 bis 5, **dadurch gekennzeichnet, dass** die Länge der hinteren Stangen (30) kleiner als oder so groß wie eine halbe Länge der Sitzfläche (12) ist.

7. Fahrzeugsitz nach einem der Ansprüche 1 bis 6, **dadurch gekennzeichnet, dass** die dritte Achse (35) durch ein vorderes Ende (40) der Sitzfläche (12) verläuft.

8. Fahrzeugsitz nach einem der Ansprüche 1 bis 7, **dadurch gekennzeichnet, dass** die dritte Achse (35) durch ein Ende der vorderen Stange (31) verläuft und dass die vierte Achse (36) durch ein anderes Ende der vorderen Stange (31) verläuft.

9. Fahrzeugsitz nach einem der Ansprüche 1 bis 8, **dadurch gekennzeichnet, dass** die fünfte Achse (37) durch einen mittleren Bereich der ersten Stange (30), der zwischen der ersten (33) und der zweiten Achse liegt, verläuft.

10. Verfahren zum Vorwärtsbewegen eines Sitzes (10) nach einem der Ansprüche 1 bis 9, um einen Raum hinter dem Sitz (10) freizugeben, **dadurch gekennzeichnet, dass** es die folgenden Schritte umfasst:
- einen Schritt, bei dem der Sitz (10) nach vorn geschoben wird,
- einen Schritt, bei dem der Sitz (10) durch ein Schwenken der hinteren Stange (30) um die erste Achse (33) gleichzeitig nach vorn und nach oben geschoben wird, was ein Anheben des hinteren Teils der Verbindungsstange (32) durch ein Gleiten des Schlitzes (38) entlang der sechsten Achse (39) bewirkt,
- einen Schritt des Schwenkens der Sitzfläche (12), der sich in einem Absenken eines vorderen Bereichs der Sitzfläche (12) und in einem Anheben eines hinteren Bereichs der Sitzfläche (12) äußert, insbesondere durch ein Schwenken der vorderen Stange (31) um die vierte Achse (36) nach vorn und nach unten, das durch das Schwenken der hinteren Stange (30) über die Verbindungsstange (32) hervorgerufen wird,
- einen Schritt, bei dem das Schwenken des Sitzes (10) fortgesetzt wird, bis die hintere Stange (30) eine vertikale Richtung überschreitet, wobei sich die vierte Achse (36), die die vordere Stange (31) und die Verbindungsstange (32) verbindet, unterhalb einer Schiene (24) befindet, wobei während dieses Schritts der Sitz (10) seine Vorwärtsbewegung fortsetzt und sich leicht absenkt, um eine umgeklappte Endposition zu erreichen.

## Claims

1. Vehicle seat (10) comprising two support rails (24), a backrest (11) and a seat pan (12), said backrest (11) being mounted on the seat pan (12) so as to be able to pivot about a connecting axis (19), **characterized in that** the seat (10) is mounted on the rails (24) so as to be able to pivot by means of a mechanism comprising two rear bars (30), two front bars (31) and two connecting bars (32) such that
- each rear bar (30) connects in articulated fashion a first axis (33) of a rail (24) to a second axis of the backrest (11),
- each front bar (31) connects in articulated fashion a third axis (35) of the seat pan (12) to a fourth axis (36) located at a front end of the connecting bar (32),
- each connecting bar (32) connects in articulated fashion a fifth axis (37) of the rear bar (30) to the fourth axis (36) of the front bar (31),
- each connecting bar (32) has a slot (38) through which passes a sixth axis (39) of a rail (24) located in front of the first axis (33).

2. Vehicle seat according to Claim 1, **characterized in that** all of the rotation axes (33, 35, 36, 37, 39) involved in the mechanism, and the connecting axis (19) between the seat pan (12) and the backrest (11), are all parallel.

3. Vehicle seat according to either one of Claims 1 and 2, **characterized in that** the backrest (11) comprises an upper panel (16) that is extended by two parallel flanges (18) that form an elbow and are secured to the seat pan (12), and **in that** the connecting axis (19) passes through an end of each flange (18) and through a central region of the seat pan (12).

4. Vehicle seat according to Claim 3, **characterized in that** the second axis of the backrest (11) passes through the flanges (18), being located behind the connecting axis (19).

5. Vehicle seat according to any one of Claims 1 to 4, **characterized in that** the first axis (33) passes through an end of the rear bar (30), and **in that** the second axis passes through another end of said rear bar (30).

6. Vehicle seat according to any one of Claims 1 to 5, **characterized in that** the length of the rear bars (30) is less than or equal to half the length of the seat pan (12).

7. Vehicle seat according to any one of Claims 1 to 6, **characterized in that** the third axis (35) passes through a front end (40) of the seat pan (12).

8. Vehicle seat according to any one of Claims 1 to 7, **characterized in that** the third axis (35) passes through an end of the front bar (31), and **in that** the fourth axis (36) passes through another end of said front bar (31).

9. Vehicle seat according to any one of Claims 1 to 8, **characterized in that** the fifth axis (37) passes through a central region of the first bar (30) located between the first (33) and the second axis.

10. Method for moving a vehicle seat (10) according to any one of Claims 1 to 9 forwards in order to free up a space behind said seat (10), **characterized in that** it comprises the following steps:
- a step of pushing the seat (10) forwards,
- a step of moving the seat (10) simultaneously forwards and upwards by pivoting the rear bar (30) about the first axis (33), causing the rear part of the bar (32) to lift by virtue of the slot (38) sliding along the sixth axis (39),
- a step of pivoting of the seat pan (12), which translates into lowering of a front region of the seat pan (12) and raising of a rear region of said seat pan (12) by virtue in particular of the front bar (31) pivoting forwards and downwards about the fourth axis (36), this being brought about by the pivoting of the rear bar (30) via the connecting bar (32),
- a step of continuing the pivoting of the seat (10) until the rear bar (30) passes a vertical direction, the fourth axis (36) connecting the front bar (31) and the connecting bar (32) ending up below the level of a rail (24), wherein during this step the seat (10) continues its motion forwards and slightly downwards until it reaches a final stowed position.
